(19) **Europäisches Patentamt**

**European Patent Office**

**Office européen des brevets**

(11) **EP 1 231 565 A1**

(12) **EUROPEAN PATENT APPLICATION**

(43) Date of publication:
**14.08.2002 Bulletin 2002/33**

(51) Int Cl.[7]: **G06T 5/00**, G06T 11/00

(21) Application number: **01103070.7**

(22) Date of filing: **09.02.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **GRETAG IMAGING Trading AG**
**5340 Wettingen (CH)**

(72) Inventors:
• **Näf, Markus**
 **8032 Zürich (CH)**

• **Held, Andreas**
 **8052 Zürich (CH)**
• **Schröder, Michael**
 **8038 Zürich (CH)**

(74) Representative: **Schwabe - Sandmair - Marx**
 **Stuntzstrasse 16**
 **81677 München (DE)**

(54) **Image colour correction based on image pattern recognition, the image pattern including a reference colour**

(57) The present invention relates to a method for correcting at least one colour of a photographic image including at least one pattern area or image pattern with a predictably known colour or memory colour, said image being transferred to a digital representation, wherein the method comprises the following steps: said at least one pattern area or image pattern is being detected with respect to its presence and its location, and preferably also with respect to its dimensions; an existing colour in the at least one detected pattern area or image pattern is being determined; at least one replacement colour value (memory colour) is being provided, said value being related to the respective at least one pattern area or image pattern and the determined existing colour is replaced by said at least one replacement colour value, to correct the colour in the image pattern or image area.

Fig. 7

EP 1 231 565 A1

**Description**

This invention relates to a method for correcting colours of a photographic image, including at least one pattern area and most preferably a face image with a predictably known colour, wherein the image is in a digital representation, in accordance with claim 1. Furthermore, the invention relates to a program in accordance with claim 18, a computer storage medium in accordance with claim 19, an image processing device in accordance with claim 20, a computer data signal in accordance with claim 21 and, finally, to a data carrier device in accordance with claim 22.

Photographic images are recorded by means of photographic image recording devices like cameras (still cameras, moved picture cameras, video cameras, digital cameras, film cameras, etc.). The picture data of photographic information carried by light is captured by the cameras and recorded, e.g., by means of a semiconductor memory or photochemical on a photographic film. The analogue recorded image information is then digitalised, e.g., by means of an analogue-digital (a/d-)converter or by scanning a film, in order to achieve digital image data. The digital image data are then processed in order to transform the data to a status in which they are suitable for being displayed for a user by means of an output device (e.g. printer plus print medium or screen).

Starting from the situation of recording of the photographic image up to the final display of the image for the user or the storage of the image data for a later display, there are a lot of possible sources of error, which may affect the photographic image data such that the photographic image displayed to the user is different from the actual appearance of the photographic object in particular with respect to the recorded colours if compared with the actual natural colours. The present invention relates to such colour deviations.

The origins for such kinds of errors or deviations may be of a technical nature or may have their origin in the way how human beings perceive colours and images. Technical causes may be, for instance, chromatic aberration of the lens system, colour balance algorithms and digital cameras, spectral sensitivity of CCD chips or film, and, in particular the application of insufficient colour correction algorithms. The colours of a photographic object captured by a camera, of course, depend on the illumination spectrum. Contrary to this, the human colour correction system has a so-called "colour constancy" feature. The natural human being is able to identify colour samples of different colour values even under different illumination conditions based on his memory about the colour value (see "Measurement of Colour Constancy by Colour Memory Matching", Optical Review, Vol. 5, No. 1 (1998), 59-63, respectively http://www.JSST.OR.JP/OSJ-AP/OpticalReview/ TOC-lists/vo105/5a059tx.htm. The colour constancy is a perceptual mechanism, which provides humans with colour vision, which is relatively independent of suspector content of the illumination of a light source. Contrary to this, the colour value recorded by cameras only depends on the spectrum of the illumination light (e.g. tungsten light, flash light, sun light).

Additionally, the human being has a good memory for colours which he often encounters in daily life, like the colour of skin, foliage, blue sky, neutral or grey (e.g. the colour of streets is grey). For instance, in the CMYK (cyan, magenta, yellow, and black) colour space the relationship for a Caucasian (European) skin tone is 13C-40M-45Y-0K. This applies at least for young women and children. Typically, magenta and yellow is close to equal and cyan is about 1/3 to 1/5 below magenta and yellow. If magenta is higher than yellow, the skin tone will look red. If yellow is much higher than magenta, the skin tone will look yellow. Black should be only in shadow areas of the skin tone or on darker skin tones (see, for instance, http:llwww. colorbalance.com/html/memory .html).

Since these kinds of memory colours exist in photographic images, they represent characteristic colours for photographic images and may be used as a reference for colour correction.

On the other hand, it is really difficult, and memory space as well as computer operation is time consuming, to search through the digital representation of any image to find out some reference colours to be able to correct all of the colour data of this image.

In the field of automatic detection of particular image patterns, it has always been a challenging task to identify a searched image pattern in a picture, said image pattern including a memory colour. Such automatic detection is recommendable if image data have to be modified or altered, for instance to correct a defective recording process. For instance, if flash light photographs have been made, it is very likely that such flash light photographs include colours which deviate from the actual photographed object itself.

There are further situations which could a cause colour defect in a photograph, which can be corrected. However, in the following, the description will be concentrated on the automatic detection of facial images, since the recognition of a skin of colours which are memory colours of a human being as referred to above.

To search skin colour and a human face in a portrait image, it is known to detect a skin colour at first. After a skin colour has been detected, it is verified whether in the region of the colour which is deemed to represent skin colour, and image pattern of a human face is existent. If this process is affirmative, the colour in the face is used to conduct a memory colour correction. However, this kind of process is not applyable if the colour defect in the image is such that the colours of recorded human skin can no longer be identified as human skin, e.g., if skin in a human face appears green, orange or grey.

It is the object of the invention to provide a colour correction, which allows using memory colours for a particular image pattern as a reference for the correction of the colour data of a recorded image. In particular, it is an object of the invention to correct a colour or colour of an image on the basis of a memory colour of human skin.

The above object is solved by the subject matter of the independent claims 1, 20, 21, 22, 23 and 24. The dependent claims are directed to advantageous embodiments.

The advantages according to the present invention can be achieved on the basis of a method for correcting at least one colour of a photographic image including at least a pattern area or an image pattern with a predictably known colour (memory colour), wherein this image has been transferred to a digital representation. According to this method at least one pattern area or image pattern in particular a human face, is detected with respect to its presence and its location and, e.g., its at least approximate dimensions. An existing colour in the at least one pattern area or image pattern is determined and at least one replacement colour value (memory colour) is then related to the respective at least one pattern area or image pattern. This replacement colour value, which corresponds to a so called memory colour, replaces then the determined existing colour to correct the colour in the image pattern or image area. In accordance with the invention, the human memory colour is used to reconstruct or correct the defective colour in an image pattern or pattern area for which a human being has kept in mind a particular colour imagination. According to the method of the present invention, it is necessary that at least one replacement colour or memory colour is stored for each pattern image or pattern area, in particular a human face. Accordingly, since it is possible that recorded images are searched through to find different kinds of image patterns, for instance faces, streets, green grass or lawn, or the like, it is necessary to store at least one replacement colour, i.e. a memory colour of a human being, for each of these image patterns. Accordingly, it is also possible to detect several image patterns or pattern areas in a photograph, i.e. the digital representation of this photograph, and to replace defective colours in these image patterns by means of stored replacement colours, i.e. memory colours which a human being has kept in mind with respect to the respective image pattern.

According to an advantageous embodiment, it is possible to determine a deviation between the at least one replacement colour value and said existing colour determined in the identified and located image pattern or pattern area. On the basis of the deviation, it is possible to modify existing colour values in the detected pattern area or image pattern. This means, the colours in the detected image pattern are not replaced only by one single colour, the replacement colour or memory colour, but are only modified by the deviation. This means, the image pattern will still include different colours also after the colour correction which will look more natural.

It is also possible to modify or correct all existing colours of the image on the basis of the deviation.

Furthermore, it is possible to determine an average colour value and/or a mean colour value of the colour values in the at least one detected image pattern or pattern areas and to use this average or mean value as the existing colour to conduct all further procedural steps of the colour correction.

Of course, it is also possible to use a distribution of colour values, the distribution or distributions of which is/are related to one or several memory colours related to the respective at least one pattern area or image pattern. During this step, a matching replacement colour value is assigned to the determined existing colour or colours.

Furthermore, since it is possible that the existing colour as well as the assigned colour value or memory colour includes different contributions with respect to different colour contents, e.g. a particular red-content, a particular green-content and a particular blue-content, or includes different contributions of a particular colour space, for instance a HSV colour space, the contributions having to be considered in a particular manner, it is possible that a transform is necessary to modify the colour values of the original digital representation of the original image. Accordingly, by means of a matching transform, it is possible to consider all colour contributions with respect to a particular colour to be corrected in an appropriate manner.

A further embodiment is based on the recognition of one or several particular image patterns, like a human face, a street or the like, the image patterns including a particular colour which is memorised by the human being on the one hand, and, on the other hand, the image pattern can be detected in a digital representation of a recorded image in a comparatively short time. Furthermore, the respective image pattern which can comparatively easily be detected, like a human face, includes a memorised colour like the colour of the skin of a human being. On the basis of the recognition of a particular image pattern and the recognition of a particular colour of this detected image pattern, it is possible to correct the colours of a photographic image by correcting all colours of the image considering the deviation between the colour detected in the detected image pattern and the memorised colour, which a human being would have expected to perceive in the detected image pattern, like for instance a face, a street, or the like.

According to the invention, it is possible to use any existing methods for image pattern recognition.

For the actual detection of faces, any system that fulfils this reasonably well will do. This could be for instance a neural network approach, as proposed by Henry Rowley, "Neural Network-Based Face Detection", PhD Thesis CMU-CS-99-117, Carnegie Mellon University, Pittsburgh 1999, or some wavelet-based approach, as proposed by Schneiderman et al, "A Statistical Method for 3D Object Detection Applied to Faces and Cars", Proc. CVPR 2000, Vol. I, pp. 746 - 752, Hilton Head Island 2000. Of importance at this stage is that the detection of faces happens fully automatically and that the detection rate is reasonably high and the phase negative rate, that is, faces being detected even though there is no face present, is reasonably low. What reasonable constitutes will depend on the actual context of the application. The disclosure of the Rowley and the Schneiderman references is incorporated into this application.

As most face detectors are not invariant to rotation, it can be useful to ensure that all the possible orientations of faces can be detected. How to do this will highly depend on the face detector being used, as the rotation invariance of each detector will vary widely. For instance, in Rowley's approach, rotation invariance is given within approximately $\pm$ 15 °. On the other hand, in the approach by Schneiderman, rotation invariance is given in a range of about $\pm$ 45 °. Therefore, rotation invariance has to be ensured by external means, this can for instance be done by pre-rotation of the image, followed by a post-processing and the normal face detection.

For a system based on the face detector by Schneiderman, four stages are necessary. In other words, the face detector is applied to images rotated by 0°, 90°, 180° and 270°, respectively.

Once a face has been detected, the search space for finding skin colour or skin colours can be restricted considerably. According to the above-described steps, it is possible to obtain a bounding box of a face, together with its approximate orientation, As stated before, face detectors are, in general, not rotation invariant. Therefore, orientation of the face could be obtained in the range given by the rotational invariance of the face detector, which could be up to $\pm$ 45 ° in the case of the Schneiderman detector.

According to a subsequent step of the method of the invention, which is conducted after the image pattern, like a face, a street, or the like, has been located, it is possible to correct the colours of photographic images. Since it is known for a located image pattern that a particular range of colours should be existent therein, and since colour distributions for these colours of the identified and located image patterns have been stored in the image processing device which is prepared to operate in accordance with the method of the invention, it is possible to verify whether the colour detected in the image pattern is within the most likely part of the colour distribution. As outlined above, these colour distributions correspond to memory colours which a human being has memorised and, therefore, would expect to perceive in the located and identified image pattern.

Summarising the method according to the invention, this method operates on the basis of a digital representation of a recorded image and, at first, identifies one pattern area, like a human face, and detects the location of this image pattern or pattern area in the photographic image, i.e. in its digital representation. Then, the predictably known colour of this pattern area or image pattern, like for instance a face, is determined for the identified and located pattern area or image pattern. At least one distribution of colour values in a colour space is then provided, which is related to the determined predictably known colour of the pattern area or image pattern. A matching colour value from said at least one distribution is then determined and assigned to the predetermined predictably known colour of the pattern area. This matching colour value should be very likely, if not most likely, expected by a human being, i.e., a human being should have kept in memory that such kinds of pattern areas, like a face, should include such colours. Then, the deviation between the predictably known colour and the corresponding matching colour value from said distribution is determined and a transform for transforming colours of the photographic image on the basis of the determined deviation is determined. On the basis of this transform, the colour data of the digital representation of the image will then be corrected.

It is possible to use the matching colour value stemming from the distribution to iteratively conduct steps b, c, d and e of claim 1, wherein, in step b of claim 1, always the last determined matching colour value replaces the predictably known colour or the last matching colour value. This process can be terminated after it has been found that the last corrected matching colour value of the identified and detected pattern area or image pattern is within an acceptable range which corresponds to a very likely section of the at least one distribution of colour values in a colour space, the distribution having been selected to most likely match with the colour detected in the pattern area or image pattern, which colour has to be corrected.

Of course, if the method according to claim 1 cannot be terminated within a given time with an acceptable success, i.e. with an acceptable colour value, it is possible to select another distribution of colour values in the colour space, which can be neighboured to the formerly used distribution of colour values in a colour space to try to achieve acceptable results on the basis of another colour distribution.

For instance, if an average or medium colour, detected in an identified and located pattern area or image pattern, has been identified to include a colour spectrum and/or HSV-value in the HSV colour space which has deviations with respect to a range of most likely colour values stemming from a selected colour distribution, it is possible to calculate the deviations. For instance, there may be some deviations in the red, the green and the blue colour values as well as some deviations with respect to the hue-value. All these determined deviations can be used to correct all the colours across the photographic image, i.e. across the digital representation of the photographic image. Afterwards, this corrected digital representation can be used once again to detect whether the identified and located image pattern or pattern area is now, after correction, within a very likely section of the selected colour distribution, the colour distribution corresponding to a distribution of colour values, which would be expected by a human being because of his colour memory.

In accordance with the invention, it is therefore possible to automatically correct the colour of a complete recorded image on the basis of the colour of only one particular image pattern or pattern area, like a face.

The colour correction of the present invention allows to calculate and perform the colour correction of a digital photographic image in such a way that memory colours are reproduced in an optimal way. The invention can in particular be applied to photographic DMD printers, photographic ink jet printers, photographic CRT printers, photographic laboratories, in particular photographic compact laboratories, also called "minilab".

Those printers or laboratories process received photographic image information. The photographic image information may be received classically on films or may be received digitally via networks (e.g. Internet, LAN, etc.) or via storage media (CDROM, disks, memory chips, etc.).

The colours used as a reference for the colour correction according to the present invention are called "reference colours". Those reference colours typically correspond to memory colours and represent colours characteristic for a significant part of most photographic images. Therefore, those kinds of characteristic colours (memory colours) may be derived from a plurality of photographic images, which may be selected e.g. statistically or by photographic experts. Based on this plurality of photographic images, a model for the characteristic colours (memory colours) may be derived, which provides the colour values which the characteristic colours (memory colours) usually should have. These colour values can be used in the shape of colour value distributions, representing likelihood's for a certain colour value.

The inventor of the present invention has considered that a memory colour is not represented by just one exact colour value, in reality, but by a plurality of colour values. According to the present invention, this plurality of colour values representing a particular memory colour (characteristic colour) may be described by means of at least one distribution, which describes the distribution or distributions of colour values in a colour space. The distribution describes, in particular, a two or three-dimensional range or section in the colour space. The distribution may not only relate to a colour value, i.e. its position in colour space, but may also relate to one or more parameters of the colour values described by the distribution. For instance, a parameter may relate to a probability that a colour value represents a particular memory colour. This probability may, for instance, be deduced from the statistical abundance of the colour value in a plurality of photographic images. In this preferred case, the distribution represents a probability distribution. According to another example, a parameter may represent a weighting factor for the correction procedure, i.e. a measure for the importance of the colour value for the representation of a memory colour. Usually, the colour values are more important the higher the abundance or the higher the probability is.

Additionally several different distributions may be provided for one and the same memory colour in case additional information about the image capture situation is available. If, for instance, the digital camera stores that the image has been taken under flash light conditions, a distribution adapted to flash light conditions or based on a plurality of flash light photographic images may be used instead of a standard distribution, which covers all kinds of image capture situations (sunlight, flash light, in-house). However, preferably, this kind of additional information is used to determine the so-called prior knowledge as described below and, thus, if no additional information is available, preferably only one distribution is assigned to one and the same memory colour. According to the present invention, the memory colour is used as a reference colour. Preferably, a set of reference colours and, thus, their corresponding distributions is provided. The predetermined data on the distributions may be stored in a memory unit and/or may be accessed via network on demand and may be updated, e.g. based on new statistical data.

The colour correction method or the colour correction device of the present invention receives the image data, which are to be corrected, and which represent a photographic image. The image data are preferably received in digital form, e.g. via a storage medium or via a network. Alternatively or additionally, the colour correction device of the present invention may comprise a scanner, which scans a photographic film in order to produce the digital photographic image data.

The colour values of a recorded image are usually digitalised and may, for instance, be represented by a three-dimensional vector, the components of which has integral numbers (e.g. 0 ... 255). Different colour spaces may be used to describe the colour values, e.g. RGB, sRGB, CMYK, Lab, CIELab, etc.) to obtain a digital representation of the image.

According to the invention, a reference colour and/or the corresponding distribution (or selected distribution) is assigned to the identified and located pattern area or image pattern. The assigned distribution is selected out of the set of available distributions.

Based on the distributions assigned to the image pattern or, in other words, based on the reference colours (memory colours) assigned to the image pattern(s) of the image, a transformation is determined. The transform represents a manipulation of the image data for correction purposes. The transform is determined based on the colour value or colour values present in the one or more of the image patterns. These colour values represent the starting point for the transform. The distributions define the end point for the transformation to be determined. The aim is that the colour values of the image pattern match the colour values described by the distributions and which a human observer would expect to see. Based on the determined transformation, the colour values of the image data, preferably of all image data may be transformed in order to achieve a corrected image. The basis for this correction are the distributions which represent knowledge about typical memory colours in photographic images. Since the memory colours are not represented by exact colour value, but by distributions, a "fuzziness" is introduced in the colour correction principle of the present invention. This "fuzziness" allows for an optimisation procedure, which allows a flexible and smooth adaptation of the correction.

The above discussed "matching" steps of claim 1 may be considered to be achieved, if the transformed colour values of the reference part(s) are close to that subspace or section of the colour space which is occupied by the assigned distribution, if the transformed colour values are closer to the most probable section of a selected distribution than the untransformed colour values, if at least part of the transformed colour values are within this section in the colour space or if most or all transformed colour values of the image pattern are within that section in the colour space. The "degree of matching" may be measured in terms of degree of overlap or closeness relative to the closeness of the untransformed colour values. A more preferred attempt is based on probability considerations, which allows the evaluation of a matching degree, based on which an optimisation procedure may be performed. This preferred attempt based on probability considerations will be described in more detail later.

Preferably, probabilistic models can be used for the memory colours, i.e. the distributions of the colour values are defined via a probability. Preferably, the probability is a conditional probability, which defines the likelihood of a colour value under the condition of a particular memory colour (reference colour). The model of each memory colour, i.e. the probability distribution for each memory colour, may be derived from a set of training data provided by photographic experts or may be based on a statistical analysis of a plurality of photographic images. Additionally, the probability distributions may be used to evaluate the quality of matching between the transformed colour values and the colour values defined by the distributions. This quality of matching may be called "matching degree". For instance, it may be assumed that the degree of matching is better the higher the probability is that a transformed colour value represents a memory colour. The probability may be calculated based on the probability distribution.

Generally speaking, an optimisation process according to the present invention is preferably based on the evaluation of a degree of matching between the transformed colour values and the colour values of the assigned distributions. This matching degree may be calculated in the case of probability distributions as mentioned above. If the distributions simply define sections in colour space, for instance the degree of overlaps between the sections in colour space, defined by the colour values of the reference parts and the section of colour space, defined by the distributions, may be used as a matching degree for the optimisation process. The optimisation process is performed such that the "matching degree" is as high as possible. If there are more than one part of an image and/or more than one distribution, the "total matching degree", which describes the overall matching quality for all image patterns and the assigned memory colours, is preferably evaluated based on a number of single matching degrees. The single matching degrees respectively describe the matching between colour values of one part and the colour values of the distribution assigned to that one part. Preferably, the total matching degree is a function of a number of single matching degrees. Preferably, the function mathematically combines the single matching degrees.

In the case of a probability distribution, preferably conditional probabilities for each part are calculated. These conditional probabilities of a part represent the probability that the image colour values of an image pattern, like e.g. a face, belong to the memory colour assigned to that pattern. The evaluation of a "total matching degree" is preferably based on a product of conditional probabilities related to the selected parts, i.e. a product represents in this example the above-mentioned function.

If the distributions are probability distributions, the "matching degree" is based on the probability and is therefore called in the following "matching probability". The matching probability describes the probability that a transformed colour value belongs to the distribution or reference colour assigned to that image pattern of the image in which the colour value is present.

The matching probability is preferably determined based on the distributions, which define a probability of colour values to represent a reference colour. Alternatively or additionally, the matching probability is based on information about a (systematic) influence on the colour values of the image data. This influence may have happened starting from the time of capturing the photographic image (e.g. spectrum of illumination of the photographed object, e.g. flash light) until the reception of the image data by the colour correction method or colour correction device of the present invention. This information on systematic influence is also called "prior knowledge" and will be discussed later in more detail.

It is possible that the colour correction is performed solely based on information on colour saturation and colour hue. If, for instance, the colour values are represented as Lab vectors, the correction may be based solely on the a and b values of the vector. A major advantage of this kind of automatic selection, assignment and correction is that even images having a significant colour distortion may be corrected reliably since the selection of the parts and the assignment of the distributions (or corresponding reference colours) has been performed independent from information on colour hue and colour saturation.

Additionally or alternatively to faces, of course, other objects may be detected and selected as parts, e.g. street, the reference colour thereof will be grey.

If it is already known that the corrected image data will be passed to a particular output channel (e.g. a printer or minilab) and if the colour management profile (such as an ICC profile; International Colour Consortium, http://www.color.org) is known, then this knowledge can be used during the step of determining the transformation, in particular during the corresponding optimisation process. For this purpose, the determination of the transformation is performed such that the transformation comprises a colour management transformation, which corresponds to the colour management profile of the output channel.

Additionally or alternatively, the correction may be performed in view of the human colour perception of the image. For this purpose, a colour appearance model (such as CIECAM97s, Mark Fairchild, "Colour Appearance Modeling and CIECAM97s", Tutorial Notes (CIC99), 1999, location: Armin Kndig ) may be used. The colour appearance model may be represented by a transformation, i.e. a colour appearance transformation. The transformation used for correction according to the present application is then determined such that the transformation comprises such a colour appearance transformation.

The present invention is not only directed to a method, but also to a program and a computer storage medium comprising the program. Additionally, the present invention is directed to a photographic image processing device, which performs the above-described correction processes. Such a photographic image processing device preferably comprises a memory unit, which stores the distributions, an input unit, which receives the digital image data, a selecting unit, which selects the reference parts, an assignment unit, which assigns the distributions to the reference parts, a determining unit, which determines the transformation by considering the above discussed matching, and a transforming unit, which performs the correction transformation. Such a photographic image processing device may be implemented by ASICs, hardwired electronic components and/or computers or chips programmed in accordance with the method. Furthermore, the invention relates to a photographic printer or photographic laboratory, in particular a photographic minilab, which performs the method described above, which comprises the above described photographic image processing device. Each device may comprise a data processing device, e.g. a computer, on which the above-mentioned program runs or is loaded.

In the following, the invention will be described in more detail with reference to embodiments in accordance with the present invention. These embodiments are described with reference to the accompanying drawings and disclose further advantageous aims and features in accordance with the invention. In the drawings:

Fig. 1 shows a flow diagram for face detection in a refined version.

Figs. 2 and 3 depict face pictograms to be identified in a digital representation of an image.

Fig. 4 shows memory colour models for "neutral" (full line), "blue sky" (dashed), "skin" (dotted), and "foliage" (dash-dotted).

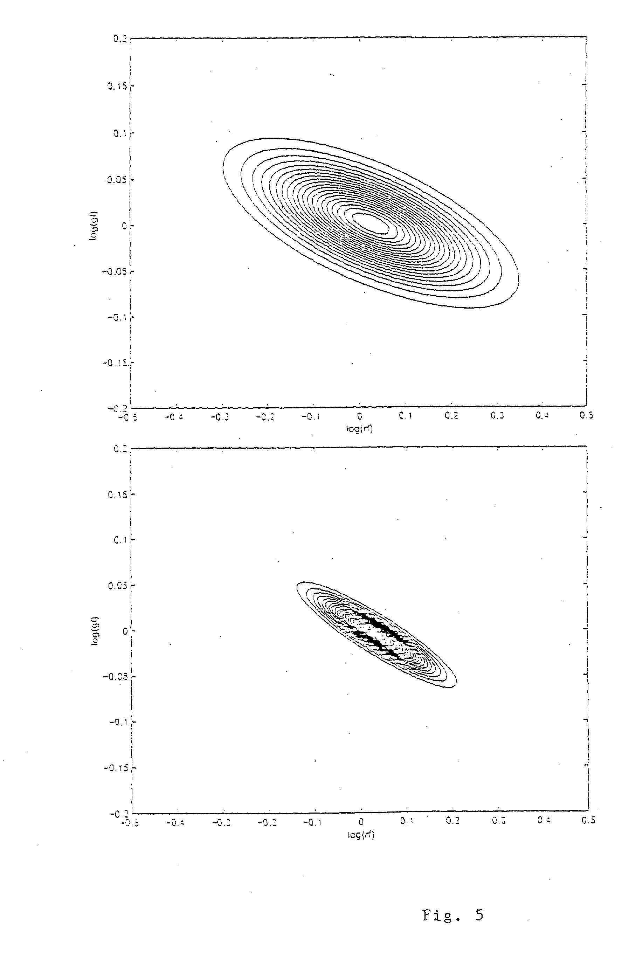

Fig. 5 shows prior knowledge distributions p (log(rf), log(gf)) for digital cameras in general (top) and for a particular model (Kodak DC 210 zoom, bottom).

Fig. 6a shows an optimisation via forward modelling, in accordance with a basic embodiment of the present invention.

Fig. 6b shows an optimisation via forward modelling, where the basic embodiment is combined with colour management for a known output channel.

Fig. 7 shows a schematic structure of a photographic image processing device, which may also be called a colour correction device in accordance with an embodiment of the present invention.

In the following, the principles of the method of the present invention will be discussed with reference to the detection of a human face and with respect to the detection of skin in this face. Of course, also other image patterns can be searched in which other memory colours can occur.

For the actual detection of faces, any system that fulfils this reasonably well will do. This could be for instance a neural network approach, as proposed by Henry Rowley, "Neural Network-Based Face Detection", PhD Thesis CMU-CS-99-117, Carnegie Mellon University, Pittsburgh 1999, or some wavelet based approach, as proposed by Schneiderman et al, "A Statistical Method for 3D Object Detection Applied to Faces and Cars", Proc. CVPR 2000, Vol. I, pp. 746 - 752, Hilton Head Island 2000. Of importance at this stage is that the detection of faces happens fully automatically and that the detection rate is reasonably high and the false negative rate, that is, faces being detected even though there is no face present, is reasonably low. What reasonable constitutes will depend on the actual context of the application. The disclosure of the Rowley and the Schneiderman references is incorporated into this application.

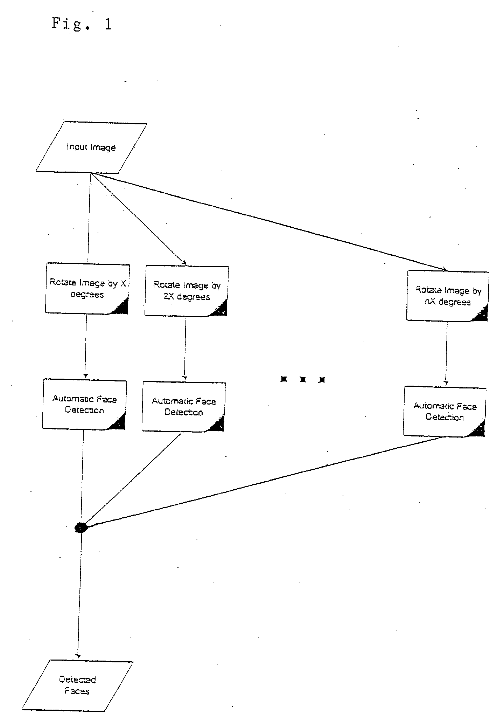

As most face detectors are not invariant to rotation, it can be useful to ensure that all the possible orientations of faces can be detected. How to do this will highly depend on the face detector being used, as the rotation invariance of each detector will vary widely. For instance, in Rowley's approach, rotation invariance is given within approximately $\pm 15°$. On the other hand, in the approach by Schneiderman, rotation invariance is given in a range of about $\pm 45°$. Therefore, rotation invariance has to be ensured by external means, this can for instance be done by pre-rotation of the image, followed by a post-processing and the normal face detection. This is shown in Fig. 1.

For a system based on the face detector by Schneiderman, four stages are necessary. In other words, the face detector is applied to images rotated by 0°, 90°, 180° and 270°, respectively.

Once a face has been detected, the search space for finding skin can be restricted considerably. According to the above-described method, it is possible to obtain a bounding box of a face, together with its approximate orientation. As stated before, face detectors are, in general, not rotation invariant. Therefore, orientation of the face could be obtained in the range given by the rotational invariance of the face detector, which could be up to $\pm\,45°$ in the case of the Schneiderman detector.

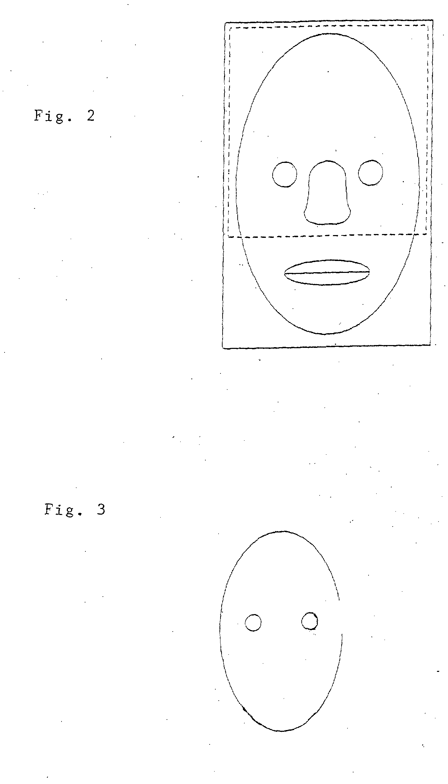

In Figs. 2 and 3, rough pictograms for the identification and/or localisation of a searched image pattern are shown. These, of course can also be rotated, tilted, shifted or the like, to identify a memory colour and, in this case, the colour of human skin.

As image pattern detection of recognition step, any processing can be incorporated that will enhance facial features, as for instance, histogram normalisation, local contrast enhancement, or the like.

After an image pattern or pattern area has been identified and located, it is possible to detect a colour in this area. In accordance with the detected colour, a memory colour can be selected to be used as a replacement colour at least in the detected image pattern. This kind of processing would be one simple aspect of the present invention.

It is also possible to determine a deviation between a most likely memory colour and a colour detected in the image pattern which has been identified and located in the respective image to be corrected. On the basis of the deviation, it is possible to correct not only the colours in the image pattern, but also all remaining colours of all remaining parts of the image to be corrected. The most likely memory colour can be determined by detecting one particular colour in the estimated center of the detected image pattern or by means of an average or mean value of the colours in the detected image pattern and the deviation between this actual colour value and memory colours which are near to this actual colour value considering a particular colour space, for instance the HSV colour space or the RGB colour space or the like.

Of course, also more sophisticated kinds of processing can be used, which, on the one hand, may provide for better colour correction results, but, on the other hand, also need more processing time for the correction.

Accordingly, a further kind of colour correction method or colour correction device, both being in accordance with a further aspect of the invention, will be described as follows.

Preferably, the definition of memory colours (replacement colours ▯ reference colours D memory colours) is performed with respect to a standardised colour space. Furthermore, the colour correction may be combined with colour management and/or colour appearance models, as mentioned above and as will be described in more detail below.

As input data to the method, a digital image (e.g. from a digital camera or a scanner) and a certain number of at least one image pattern i (i = 1 ... N) in the image with allocated memory colours $A_i$ are used. The image patterns or pattern areas may be identified by the position, e.g. by Cartesian co-ordinates $x_i/y_i$. The reference parts may comprise one or more pixels (picture elements or image elements). The number of image patterns given is N. The image data at the position of each image pattern is characterized by a characteristic colour value. If the image pattern consists of more than one pixel, the colour value assigned to the image pattern may be a function of the colour values of the pixels in the image pattern. The function may, for instance, be the arithmetic medium or the median of the colour values of the pixels or the colour values in the center of the image pattern may be more weighted than the colour values of the pixels in the periphery of the image pattern. The colour value of the image pattern (e.g. the function of the colour values of the pixels in the image pattern) may be described in a particular colour space, e.g. RGB. In the latter case, the colour value of the image pattern or pattern area i has the values $r_i$, $g_i$, $b_i$.

If pointing on the image identifies the image pattern, the image pattern may just correspond to the pixel at that point. The image pattern may correspond to mean values of a region around the point, whereby the region may be a region of fixed size centred at the point, a region obtained via region growing with the user point as the seed on the basis of the pattern recognition method of the invention.

After the input data, i.e. the image pattern, the actual colour value of the image pattern, and the replacement colour, which corresponds to the target colour value of the image pattern, is available, the transformation T for the colour correction may be determined. At the beginning, the transformation T is unknown but may be defined as:

$$\begin{pmatrix} r' \\ g' \\ b' \end{pmatrix} = T \begin{pmatrix} r \\ g \\ b \end{pmatrix} \qquad (1)$$

The above given representation of the colour values as rgb values is only an example and other representation of the colour value, e.g. by means of Lab vectors, may be chosen. The transformation T transforms the rgb values into the new pixel values r'g'b'. This transformation can be as complicated as is necessary to be appropriately applicable in accordance with the invention. Examples for transformations are disclosed in G. Wyszecki and W. Stiles, Colour Science: "Concepts and Methods, Quantitative Data and Formulae", Wiley, 1982. For instance, the transformation may be as follows:

- The rgb values are simply scaled. This kind of correction is often done in digital cameras. In this case, the transformation T corresponds to a diagonal matrix in which the components of the matrix correspond to multiplication factors.
- The colour values may be transformed from one colour space into another colour space by the transformation. For instance, the rgb values may be transformed to colourimetric XYZ values and then these values are scaled. Preferably, the colour values of the image pattern are transformed into a colour space in which one dimension represents the luminance or lightness and the other dimensions, independent therefrom, describe the colour hue and the colour tone.
- The transformation may transform rgb values or any other kind of colour values into LMS Cone response values and then these values are scaled.
- The transformation may represent the application of a general 3 x 3 matrix in any of the above-mentioned colour spaces. The matrix may represent a rotation, deformation, or displacement in colour space. In particular, if one of the dimensions of the colour space represents luminance or brightness, the transformation may be constructed such that the luminance value is kept constant. For instance, the transformation may comprise a matrix, which describes a rotation around the luminance or brightness axis.

A model for memory colours, which relates to distributions of colour values corresponding to the memory colours, is a probabilistic model. Each memory colour $A_k$ ($A_1$ = neutral or gray, $A_2$ = blue sky, $A_3$ = skin, $A_4$ = foliage) is defined via its likelihood:

$$p(a, b \mid A_k). \tag{2}$$

The above expression describes the probability that a colour value represented by the parameters a and b belongs to the memory colour $A_k$. Only as an example, it is assumed in the following that the parameters a and b correspond to the components a and b of the Lab vector. The above expression represents a conditional probability and describes the probability of a colour value a, b under the condition of a memory colour $A_k$.

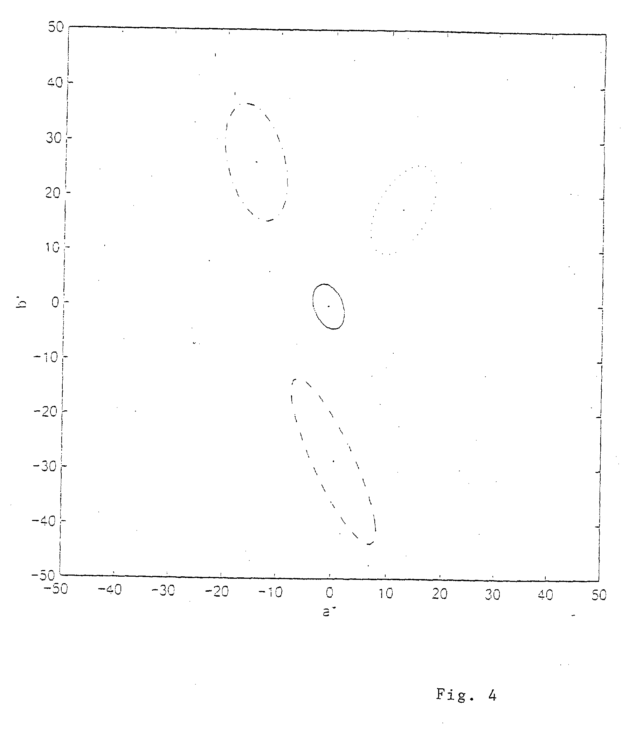

The detailed shape of the above equation (2) can be as complicated as necessary to describe the training data, e.g. to describe the result of a statistical analysis of memory colours in a plurality of photographic images. The inventors have achieved satisfying results, when they describe the probability distributions with two-dimensional, multivariate Gaussians. The Fig. 4 depicts examples for memory colour models (probability distributions) of "neutral" (full line), "blue sky" (dashed), "skin" (dotted), and "foliage" (dash-dotted). The probability distributions are shown such that the Gaussians are depicted at 50 % maximum probability of each memory colour, i.e. $p(a, b \mid A_1)$ = 0.5 for all colour values, which have an (a, b) value which lies on the full line in Fig. 4.

In the following, it is described in which way the transformation is determined in order to achieve the best matching between the transformed colour values of the image patterns and the colour values of the probability distributions of the replacement colours assigned to the image patterns. The method described in the following is an optimisation method or algorithm.

The transformation T is characterized by a certain number of parameters (e.g. the scaling factors rf, gf, bf) representing the diagonal components of a 3 x 3 matrix. These parameters are determined from the input colour values $r_i$, $g_i$, $b_i$ of the identified and located image patterns i in such a way that the transformed pixels $r'_i$, $g'_i$, $b'_i$ correspond to the optimised realisation of the corresponding memory colour $A_i$ as good as possible, given the image patterns and the colour values of the image pattern.

The degree of "as good as" may be defined in the a-b colour plane of the Lab colour space. The components of the Lab colour space may also be designated as L*, a*, b* (see, for instance, Fig. 4). In this case, the components relate to CIELab. Psychological studies (K. Toepfer and R. Cookingham, "The Quantitative Aspects of Colour Rendering for Memory Colours", in IST PICS2000 Conference, pages 94-98, 2000, location: MS) shows that this Lab colour space is well suited to define memory colours and thus to define replacement colours.

Given a particular transformation $T_\theta$ ($\theta$ denotes the parameters of this transformation), we can calculate the a and b values of the image patterns i as

$$a'_i = f_a (r'_i, g'_i, b'_i) = f_a (T_\theta (r_i, g_i, b_i)) \qquad (3)$$

$$b'_i = f_b (r'_i, g'_i, b'_i) = f_b (T_\theta (r_i, g_i, b_i)) \qquad (4)$$

where $f_a$ and $f_b$ denote the functions to calculate the a and b value from the used colour space of rgb (e.g. sRGB or Adobe RGB).

Using the set of $a'_i$ and $b'_i$ and the memory colour model, i.e. the probability distributions defined in equation (2), we can calculate the total probability, which can consider also all image patterns as a product of the individual probabilities, if desired:

$$p(D \mid \theta) = \prod_{i=1}^{N} p(a'_i, b'_i \mid m_i) \qquad (5)$$

The total probability $p(D \mid \theta)$ designates an overall probability that the transformed colour values of all image patterns represent the memory colours respectively assigned to the image patterns. The parameter D designates the input data, i.e. the image pattern, the colour values of the image patterns and the replacement colours assigned to the image patterns. The probability $p(D \mid \theta)$ therefore designates the conditional *a priori* probability of the input data D under the condition of the transform parameter $\theta$.

Based on Bayes' equation, the posterior conditional probability may be obtained:

$$p(\theta \mid D) \propto p(D \mid \theta) \cdot p(\theta) \qquad (6)$$

The posterior probability $p(\theta \mid D)$ describes the probability for the transform parameter $\theta$ under the condition of the input data D, i.e. gives the likeliness that the transform parameter $\theta$ describes the correct transform. Thus, $p(\theta \mid D)$ is a measure for the above-mentioned "matching degree". On the basis of the posterior probability, the colour correction may be optimised. This may be performed by maximising the equation (6). If the memory colour model and the prior model are multivariate Gaussians, then this probability has convex shape and the maximum can be obtained via gradient descent in a very efficient way. The method of "gradient descent" represents an optimisation technique (numerical technique) for non-linear functions, which attempts to move incrementally to successively lower (in the present case: higher) points in search space, in order to locate a minimum (in the present: case a maximum).

The prior knowledge $p(\theta)$ on the colour correction referred to above, to be done for particular image data, can be of general or of image dependent nature. Examples for "general" prior knowledge could be as follows:

- The knowledge about spectral or colour characteristics of devices involved in the image capturing process, e.g. spectral or colour characteristics of digital cameras and. films of a particular type, which are later scanned in order to obtain digital image data. For instance, a certain digital camera may have a characteristic systematic bias in its colour sensitivity.
- Knowledge about the amount of correction necessary in connection with the devices involved in the image capturing process. For instance, the fact that some digital camera typically needs a larger colour correction than others.

Besides the above-mentioned "general" prior knowledge, other kinds of knowledge, e.g. the "image dependent" prior knowledge, can be used. Examples for "image dependent" prior knowledge are:

- Knowledge about characteristics and/or shortcomings of algorithms involved in the processing of the image data before these image data are subjected to the colour correction of the present invention. For instance, the processing may be performed based on an automatic colour correction or colour constancy algorithm, and the precision of these algorithms is known and represents prior knowledge. If, for instance the precision of these algorithms is known, an upper limit for the amount of correction by the colour correction method of the present invention may be deduced, based on which $p(\theta)$ may be determined.
- The prior knowledge may be based on additional information, which is deduced from the image data. For instance, the image may be classified into a class. The images, which are members of a particular class, have a particular systematic bias in their colour appearance, which may be used to determine p(θ). For instance, the images may be classified in sunset images, portrait images and so on.

Mathematically speaking, prior knowledge of the colour correction is always available as probability distribution

$$p(\theta) \tag{7}$$

and can be included in the process of inference via equation (6).

The colour correction method of the present invention can preferably be combined with a colour management method or the colour correction device of the present invention comprising preferably a colour management unit. The procedure of optimisation of the transformation T described above is, in principle, an optimisation using a forward model, i.e. the colour transformation T is changed until the modified (transformed) colour values optimally match the models of ideal memory colours, i.e. the colour values of the colour distributions corresponding to the replacement colours. In the basic workflow, this match is done in a standardised colour space (e.g. a*b* plane of L*a*b*). However, if it is already known that later the image will be passed to a particular output channel (e.g. a minilab) with a known colour management profile (such as an ICC profile, International Colour Consortium, http://www.color.org) then this knowledge is preferably used during the optimisation process.

The colour profile relates to the colour values of the input data which are input into the output channel to the colour values which are output by the output channel (output device). Assuming, for instance, that the image data input in the output channel express the colour values as rgb values and that the colour values expressed by the output signal of the output channel are represented as Lab values, then the colour profile contains the information of which Lab values are to be expected on the output for which input rgb values. The Lab values relate, for example, to those Lab values, which are measured when optically analysing the printout of a printer, which represents the output channel. This optimisation step can be done in such a way as to optimise the reproduction of memory colours output by the output channel (e.g. the memory colours on the printout).

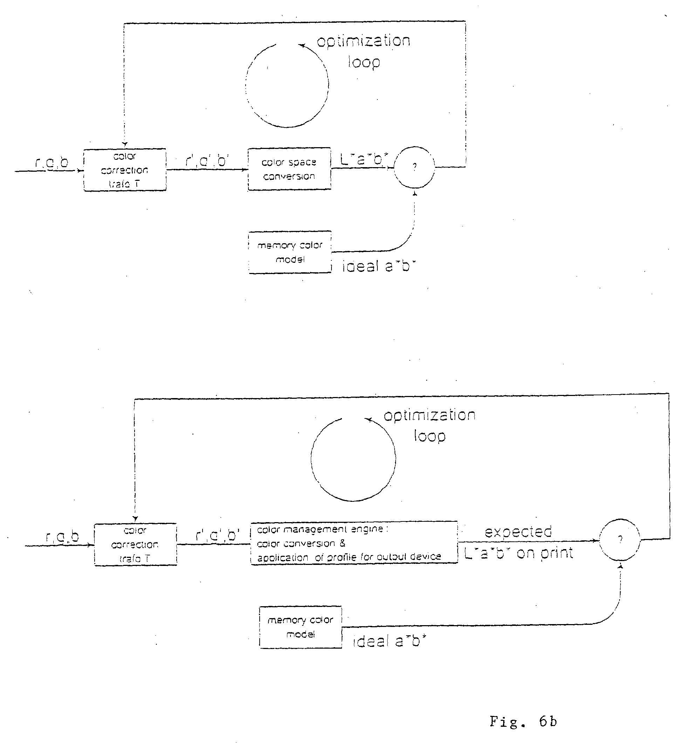

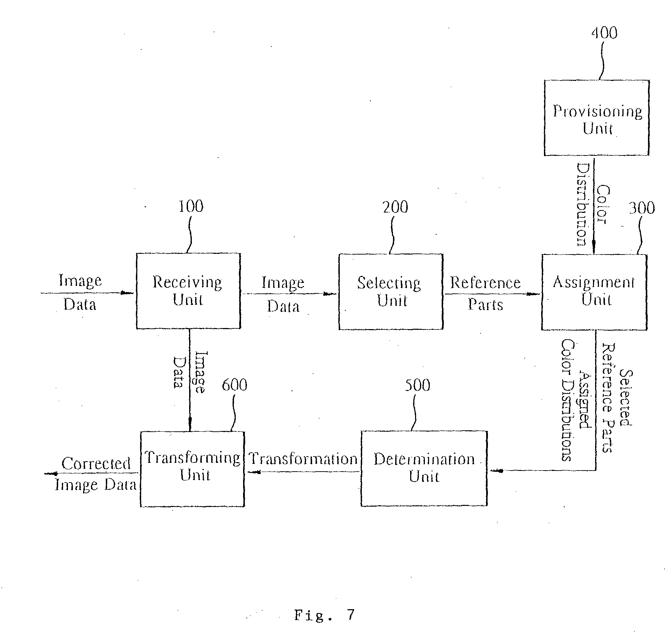

The Fig. 6a shows the basic optimisation loop. The data rgb are input in the colour correction process of the present invention and are to be corrected by a correction transformation T. As a result of the correction transformation T colour values r'g'b' are obtained. These colour values are subjected to a colour space conversion in order to obtain L*a*b* colour values. Based on the memory colour model (colour distributions), which represent the information on the replacement colours or ideal a*b* values, it is checked in a step in accordance with Fig. 6a whether the a*b* values obtained after the colour space conversion match with the ideal a*b* values. The colour correction transformation T is changed until the matching is optimised. This may be done, for instance, iteratively as indicated by the optimisation loop in Fig. 7.

The colour correction transformation T and the colour space conversion may be represented by a transformation T', which comprises both the colour correction transformation T and the colour space conversion. The optimisation loop is then performed in order to optimise the (overall) transformation T'.

The Fig. 6a depicts the optimisation via forward modelling. The basic optimisation procedure of Fig. 6 is combined with colour management for a known output channel. The overall transformation T' comprises instead of the colour space conversion transformation a colour management transformation. Of course, according to an alternative embodiment, the overall transformation T' may comprise both a colour management transformation and a colour space transformation. Furthermore the sequence of the correction transformation T and the colour management transformation or the colour space transformation may be changed, i.e. the colour space transformation or the colour management transformation may be performed before the colour correction transformation.

The colour management transformation corresponds to an application of a colour profile on the r'g'b' colour values in order to achieve output values, which are expected to be output by the output channel (output device). If, for instance, the output device is a printer, the colour management transformation results in L*a*b* colour values, which are expected on the prints produced by the printer. As in Fig. 6a, the quality of the matching between the transformed colour values and the colour values is checked, which results from the memory colour model (ideal a*b*).

Additionally or alternatively to the colour management transformation a colour appearance transformation may be incorporated in the optimisation loop shown in Fig. 6a and in Fig 6b. If this is the case, the overall transformation T' comprises not only the correction transformation T but at least also a colour appearance transformation. The colour appearance transformation represents a colour appearance model. If the colour appearance transformation replaces the colour management transformation in Fig. 7b, this would mean that neither the theoretical colour (basic optimisation) nor the paper colour (basic optimisation plus colour management model) but instead the perceived colour is optimised using MCPCC.

This can be easily done by substituting the colour management engine in Figs. 6 by a colour appearance model (such as "CIECAM97s", Mark Fairchild, "Colour Appearance Modeling and CIECAM97s", Tutorial Notes (CIC99), 1999, location: Armin Kndig). Preferably the colour appearance transform, which represents the colour appearance model results in a colour correction, which adjusts the colour values output by the colour correction to typical conditions under which a human being perceives the colours. For instance, the colour values may be adjusted to a typical illumination type (e.g. A or D65), a typical background colour on which the image is looked at for instance, the background colour provided by a photographic album. The colour values may be adjusted to the kind of medium used for printouts. The kind of medium may have an influence on the colour perception, e.g. the medium may be shiny (brilliant) or mat. Additionally the strength of the illumination (brightness) may have an influence on the perception of the colours by human being and the colour correction may be adapted, for instance, to typical illumination strength, when a human being looks at the image.

It has to be kept in mind that the colour correction according to this invention is accomplished by detecting at least one image pattern which usually includes a memory colour which a human being would expect to perceive therein.

Fig. 7 shows schematically a nightly sophisticated structure of a photographic image processing device, which performs the correction in accordance with one aspect of the invention or of a colour correction device which operates in accordance with the invention. The receiving unit 100 receives the image data, which may, for instance be a modem or a network part. The receiving unit passes the image data to the selecting unit. The selecting unit may, for instance, comprise a processing unit which allows the selecting the at least one image pattern. The image patterns are passed from the selecting unit to the assignment unit. The assignment unit accesses the provisioning unit, which may be a memory or storage and which provides the memory colours for the corresponding image patterns or the colour distributions for the memory colours to the assignment unit upon request. The assignment unit assigns the appropriate memory colours or colour distributions to the corresponding image patterns. The image patterns together with the assigned memory colours or memory colour distributions are passed from the assignment unit 300 to the determination unit 500. The determination unit 500 determines the transformation e.g. by means of the optimisation loop described above. The determined transformation is passed to the transforming unit 600. The transforming unit 600 receives the image data from the receiving unit and transforms the image data in accordance with the transformation in order to obtain the corrected image data, which are then output by the photographic image processing device or colour correction device of the present invention.

A statistical method for 3D object detection can also be used. Statistics of both image pattern appearance and "non-image pattern" appearance using a product of histograms can be employed. Each histogram represents the joint statistic of a subset of wavelet coefficients and their position on the image pattern. This approach is to use many such histograms representing a wide variety of visual attributes. Using this method human faces can reliably be detected with out-of-plane rotation.

The variation in visual appearance is the main problem here. For example, faces vary in shape, size, colouring and further details. Visual appearance also depends on the surrounding environment. Light sources will vary in their intensity, colour and location with respect to the image pattern. Nearby image patterns to be detected may cast shadows on the image pattern or reflect additional light on the image pattern. The appearance of the image pattern also depends on its pose; that is, its position and orientation with respect to the camera. For example, a side view of a human face will look much different than a frontal view. An image pattern detector much accommodate all this variation and still distinguish the image pattern from any other pattern that may occur in the visual words.

Therefore, an image pattern detection with two stages for image pattern detection is used. To cope with variation in pose, we use a view-based approach with multiple detectors that are each specialised to a specific orientation of the image pattern. Statistical modelling within each of theses detectors is accomplished to account for the remaining variation.

Specialised detectors are used each of them coping with a specific orientation of the image pattern. Accordingly, one detector may be specialised to left or right profile views of faces and one may be specialised to frontal views. These view-based detectors are applied in parallel and their results are than combined. For human faces two view-based detectors are used, i.e. for example the frontal and right profile. To detect left-profile faces. It is possible to direct the right profile detector to mirror reversed input images. Each of the detectors can not only be specialised in orientation, but can also be designed to find the image pattern only at a specified size within a rectangular image window. Therefore, to be able to detect the image pattern or face at any position in an image. The detectors will be re-applied for all possible positions of this rectangular window. Then to be able to detect the image pattern at any size the input image will be resized iteratively and the detectors will be re-applied in the same fashion to each resized image.

Each of the detectors uses the same underlying form for the statistical decision rule. The detectors differ only in that they use statistics collected from different sets of images.

There are two statistical distribution which can be modelled for each view-based detector. The statistics of the given image pattern, P(image| object) and the statistics of the rest of the visual world, which we call the "non-image pattern" class P(image| object) are modelled. Then a detection decision will be determined using the likelihood ratio test:

$$\frac{P(image\,|\,\text{object})}{P(image\,|\,\text{non-object})} > \lambda \qquad \left(\lambda = \frac{P(\text{non-object})}{P(\text{object})}\right) \qquad (1)$$

If the likelihood ratio (the left side) is larger than the right side, we decide the image pattern is present.

The likelihood ratio test is equivalent to Bayes decision rule (MAP decision rule) and will be optimal if the representations for P(image| object) and P(image| non-object) are accurate. The rest of this section focuses on the functional forms being chosen for these distributions.

In the equations, the term image pattern or pattern area is represented by the term object and non-object, respectively.

The difficulty in modelling P(image | object) and P(image | non-object) is that the true statistical characteristics of appearance either for the image pattern or for the rest of the world are not known. For example, it is not known whether the true distributions are Gaussian, Poisson, or multimodal. These properties are unknown since it is not tractable to analyse the joint statistics of large numbers of pixels.

The approach here is to choose models that are flexible and can accommodate a wide range of structures.

Histograms are almost as flexible as memory-based methods but use a more compact representation whereby the probability is obtained by table look-up. Estimation of a histogram simply involves counting how often each attribute value occurs in the training data. The resulting estimates are statistically optical. They are unbiased, consistent, and satisfy the Cramer-Rao lower bound.

The main drawback of a histogram is that only a relatively small number of discrete values can be used to describe appearance. To overcome this limitation, multiple histograms are used where each histogram, $P_k$(image | object), represents the probability of appearance over some specified visual attribute, *pattern*$_k$, that is, *pattern*$_k$ is a random variable describing some chosen visual characteristic such as low frequency content. The appearance has to be partitioned into different visual attributes. However, in order to do this probabilities from different attributes have to be combined.

To combine probabilities from different attributes, the following product has to be taken where each class-conditional probability function has to be approximated as a product of histograms:

$$P(image\,|\,\text{object}) \approx \prod_k P_k(pattern_k\,|\,\text{object})$$

$$P(image\,|\,\text{non-object}) \approx \prod_k P_k(pattern_k\,|\,\text{non-object}) \qquad (2)$$

In forming these representations for P(*image*| object) and P(*image*| non-object) it is implicitly assumed that the attributes *(pattern*$_k$*)* are statistically independent for both the image pattern or object and the non-image pattern or non-object.

In choosing how to decompose visual appearance into different attributes the question of what image measurements to model jointly and what to model independently can be delt with.

Obviously, if the joint relationship two variables seems to distinguish the object or image pattern from the rest of the world, it should be tried to model them jointly. If the results are uncertain, it is still probably better to model them independently than not to model one at all.

For faces and also for other image patterns it is necessary to jointly model visual information that is localised in space, frequency, and orientation. Accordingly, the visual appearance along these dimensions has to be decomposed. The appearance of the object or pattern area has to be decomposed into parts whereby each visual attribute describes a spatially localised region on the object. By doing so the limited modelling power of each histogram will be concentrated over a smaller amount of visual information.

Since important cues for faces and cars occur at many sized, multiple attributes over a range of scales are necessary. Such attributes are to be defined by making a joint decomposition in both space and frequency. Since low frequencies exist only over large areas and high frequencies can exist over small areas. Attributes with large spatial extents are defined to describe low frequencies and attributes with small spatial extents are defined to describe high frequencies. The attributes that cover small spatial extents will be able to do so at high resolution. These attributes will capture small distinctive areas such as the eyes, nose, and moth on a face. Attributes defined over larger areas at lower resolution will be able to capture other important cues. On a face, the forehead is brighter than the eye sockets.

Also some attributes will be decomposed in orientation content. For example, an attribute that is specialised to horizontal features can devote greater representational power to horizontal features than if it also had to describe vertical features.

Finally, by decomposing the object or image pattern spatially, it is not intended to discard all relationships between the various parts. The spatial relationships of the parts is an important cue for detection. For example, on a human face, the eyes, nose, and mouth appear in a fixed geometric configuration. To model these geometric relationships, the positions of each attribute sample with respect to a coordinate frame affixed to the object have to be represented. This representation captures each sample's relative position with respect to all the others. With this representation, each histogram now becomes a joint distribution of attribute and attribute position, $P_k(pattern_k(x,y), x,y \mid object)$ and $P_k(pattern_k(x,y), x,y \mid non\text{-}object)$, where attribute position, x,y, is measured with respect to a rectangular image window. However, the attribute position is not represented at the original resolution of the image. Instead, it is also possible to represent a position at a coarser resolution to save on modelling cost and to implicitly accommodate small variations in the geometric arrangements of parts.

To create visual attributes that are localised in space, frequency, and orientation, it is necessary to be able to easily select information that is localised along these dimensions. It is advantageous to transform the image into a representation that is jointly localised in space, frequency, and orientation. Accordingly, a wavelet transform of the image should be transformed.

The wavelet transform is not the only possible decomposition in space, frequency, and orientation. Both the short-term Fourier transform and pyramid algorithms can create such representation. Wavelets, however, produce no redundancy. Unlike these other transforms, it is possible to perfectly reconstruct the image from its transform where the number of Transform coefficients is equal to the original number of pixels.

The wavelet transform organises the image into subbands that are localised in orientation and frequency. Within each subband, each coefficient is spatially localised. A wavelet transform based on 3 level decomposition using a 5/3 linear phase filter bank can be used, as disclosed in G. Strang and T. Nguyen, Wavelets and Filter Banks, Wellesley-Cambridge Press, 1997, producing 10 subbands as shown below:

| | | Level 2 HL | Level 3 HL |
|---|---|---|---|
| L1 LL | L1 HI | | |
| L1 LH | L1 HH | | |
| Level 2 LH | Level 2 HH | | |
| Level 3 LH | | | Level 3 HH |

Each level in the transform represents a higher octave of frequencies. A coefficient in level 1 describes 4 times the area of a coefficient in level 2, which describes 4 times the area of a coefficient in level 3. In terms of orientation, LH denotes low-pass filtering in the horizontal direction and high pass filtering in the vertical direction, that is horizontal features. Similarly, HL represents vertical features.

This representation is used as a basis for specifying visual attributes. Each attribute will be defined to sample a moving window of transform coefficients. For example, one attribute could be defined to represent a 3x3 window of coefficients in level 3 LH band. This attribute would capture high frequency horizontal patterns over a small extent in the original image. Another pattern set could represent spatially registered 2x2 blocks in the LH and HL bands of the 2nd level. This would represent an intermediate frequency band over a larger spatial extent in the image.

Since each attribute must only take on a finite number of values, a vector quantization of its sampled wavelet coefficients will have to be computed. To keep histogram size under e.g. 1,000,000 bins, each attribute should be expressed by no more than e.g. 10,000 discrete values since x,y (position) will together take on about 100 discrete values. To stay within this limit, each visual attribute will be defined to sample 8 wavelet coefficients at a time and will quantize each coefficient to 3 levels. This quantization scheme gives $3^8=6,561$ discrete values for each visual attribute.

Overall, e.g. 17 attributes are used that sample the wavelet transform in groups of 8 coefficients in one of the following ways.

A: Intra-subband - All the coefficients come from the same subband. These visual attributes are the most localized in frequency and orientation. 7 of these attributes are defined for the following subbands: level 1LL, level 1 LH, level 1 HL, level 2 LH, level 2 HL, level 3 LH, level 3 HL.

B: Inter-frequency-Coefficients come from the same orientation but multiple frequency bands. These attributes represent visual cues that span a range of frequencies such as edges. 6 such attributes are defined using the following subband pairs: level 1 LL - level 1 HL, level 1 LL - level 1 LH, level 1 LH - level 2 LH, level 1 HL - level 2 HL, level 2 LH - level 3 LH, level 2 HL - level 3 HL.

C: Inter-orientation - Coefficients come from the same frequency band but multiple orientation bands. These attributes can represent cues that have both horizontal and vertical components such as corners. 3 such attributes are determined using the following subband pairs: level 1 LH - level 1 HL, level 2 LH - level 2 HL, level 3 LH - level 3 HL.

D: Inter-frequency / inter-orientation - This combination is designed to represent cues that span a range of frequencies and orientation. One such attribute combining coefficients is defined from the following subbands: level 1 LL, level 1 LH, level 1 HL, level 2 LH, level 2 HL.

In terms of spatial-frequency decomposition, attributes that use level 1 coefficients describe large spatial extents over a small range of low frequencies. Attributes that use level 2 coefficients describe mid-sized spatial extents over a mid-range of frequencies, and attributes that use level 3 coefficients describe small spatial extents over a large range of high frequencies.

Afterwards each attribute is sampled at regular intervals over the full extent of the object, allowing samples to partially overlap. Our philosophy in doing so is to use as much information as possible in making a detection decision. For example, salient features such as the eyes and nose will be very important for face detection, however, other areas such as the cheeks and chin will also help, but perhaps to a lesser extent.

Thus, the final form of the detector is given by:

$$\frac{\prod\limits_{x,\,y\,\in\,\text{region}}\prod\limits_{k\,=\,1}^{17} P_k(pattern_k(x,y),x,y\,|\,\text{object})}{\prod\limits_{x,\,y\,\in\,\text{region}}\prod\limits_{k\,=\,1}^{17} P_k(pattern_k(x,y),x,y\,|\,\text{non-object})} > \lambda \qquad (6)$$

where "region" is the image window (see Section 2) to be classified.

Now, the actual histograms for $P_k$ ($pattern_k$(x,y),x,y | object and $P_k$ ($pattern_k$(x,y),x,y | non-object) have to be developed. In gathering statistics, one of the immediate problems is to choose training examples for the class "non-object" or non-image pattern. Conceptually, this class represents the visual appearance of everything in the world excluding the object to be classified. In order to achieve accurate classification it is important to use non-object samples that are most likely to be mistaken for the object. This concept is similar to the way support vector machines, work by selecting samples near the decision boundary as disclosed in V.N. Vapnik, The Nature of Statistical Learning Theory, Springer, 1995, . To determined such samples a method called bootstrapping can be used. In bootstrapping, preliminary detector can be trained by estimating $P_k$ ($pattern_k$(x,y),x,y | non-object) using randomly drawn samples from a set of non-objects images. Then, this preliminary detector is applied to a set of about 2000 images that do not contain the object and select additional samples at those locations that gave high response.

We collect $P_k$ ($pattern_k$(x,y),x,y | object) from images of the object. For each face viewpoint about 2,000 original images are used. For each original image around 400 synthetic variations are generated by altering background scenery and making small changes in aspect ratio, orientation, frequency content, and position.

Statistics for these training examples can be gathered using several approaches. For the face detector, the classification error is minimized over the training set, by using the AdaBoost disclosed in Y. Freund, R.E. Shapire, "A Decision-Theoretic Generalization of On-Line Learning and an Application to Boosting", Journal of Computer and System Sciences, 55:1, pp. 119-139, 1997, and R.E. Shapire, Y. Singer, "Improving Boosting Algorithms Using Confidence-rated Predictions", Machine Learning 37:3, pp. 297, 336, December, 1999, algorithm. AdaBoost works in an iterative fashion. First, a detector is trained by assigning the same weight to all training examples. Then the detector is iteratively retrained where at each iteration more weight is given to training examples that were incorrectly classified by the detector trained in the previous iteration. It can be shown that through this process, the classification error can be decreased.

According to this approach a heuristic coarse-to-fine strategy is used. First the likelihood ratio for each possible object location is partially evaluated using low resolution visual attributes, i.e., the ones that use level 1 coefficients. Then an evaluation at higher resolution is accomplished for those image pattern candidates that are promising, i.e., are above a minimum threshold for the partial evaluation.

Preferably the transformation which results in a correction of the color values is variably applied to the color values, preferably in dependence on at least one image characteristic. Preferably the correction is locally weighted. This weighting may be performed by means of masks which elements relate to local parts of the image, e.g. one pixel or number of adjacent pixels, and the elements represent preferably an image characteristic (e.g. lightness) of the local part. The weighting is preferably performed based on at least one image characteristic. Preferably the image characteristic is luminance (lightness). Alternatively or additionally the image characteristic may be (local) contrast, color hue, color saturation, color contrast, sharpness, etc. The inventor has recognized that in particular a weighting which depends on the luminance allows to avoid color casts in light regions. Preferable the weighting is performed such that the correction is more performed (performed at a higher degree) in areas of medium or mean luminance than in areas of low or high luminance. For instance, in case of no or low luminance, no correction is performed or only a slight correction is performed. If the above-mentioned weighting factor is chosen to be between 0 and 1, the weighting factor is equal or closed to zero in case of low luminance. Preferably the weighting factor increases towards medium luminance. Preferably the weighting factor decreases from medium luminance to high luminance. Preferably the correction factor is about zero or equal to zero in case of maximum or highest possible luminance. The function which may be used for calculating the weighting factor in dependence on luminance may be an inverse parabolic function which has its maximum around the medium luminance.

## Claims

1. Method for correcting at least one colour of a photographic image including at least one pattern area or image pattern with a predictably known colour (memory colour), said image being transferred to a digital representation, the method comprising the following steps:

   a) said at least one pattern area or image pattern is being detected with respect to its presence and its location, and preferably also with respect to its dimensions;
   b) an existing colour in the at least one detected pattern area or image pattern being determined;
   c) providing at least one replacement colour value (memory colour) being related to the respective at least one pattern area or image pattern;
   d) replacing said determined existing colour by said at least one replacement colour value, to correct the colour in the image pattern or image area.

2. Method according to claim 1, wherein a deviation between the at least one replacement colour value (memory colour) and said existing colour being determined, and modifying existing colour values in the detected patent area or image pattern on the basis of the deviation.

3. Method according to claim 2, wherein in particular all existing colours of the image are modified on the basis of the deviation.

4. Method according to one of claims 1 to 3, wherein an average colour value and/or mean colour value of the colour values in the at least one detected image pattern or pattern area is determined to be used as the existing colour.

5. Method according to one of claims 1 to 4, wherein the replacement colour value (memory colour) is determined on the basis of at least one distribution of colour values (memory colour) being related to the respective at least one pattern area or image pattern, wherein a matching replacement colour value is assigned to the determined existing colour (s).

6. Method according to one of claims 1 to 5, wherein a transform is being provided for transforming existing colour values on the basis of the matching replacement colour value.

7. Method according to one of claims 1 to 6, wherein the colour correction is repeatedly conducted, using the modified existing colour values as the existing colour values.

**8.** Method according to one of claims 1 to 7, wherein a basic pattern of a recordable object is stored to be detected in the digital representation of the photographic image to detect the location of the pattern area or image pattern.

**9.** Method according to one of claims 1 to 8, wherein the pattern area represents a human face and wherein accordingly also the basic pattern represents a human face for instance in the shape of a pictogram.

**10.** Method according to one of claims 5 to 9, wherein a colour distribution is used derived from one of said pattern area with the predictably known colour and/or predictably known colour distribution (both memory colour representations).

**11.** Method according to one of claims 5 to 10, wherein several distributions are provided and one distribution is selected which is deemed to match with the determined predictably known colour (memory colour).

**12.** Method according to one of claims 5 to 11, wherein additional recording information is provided, providing data about light conditions, distance conditions, or the like, to provide supplemental colour correction data.

**13.** Method according to one of claims 6 to 12, comprising the steps of:

> a) providing at least one set of distributions of colour values (memory colours) in the colour space,
> b) assigning one of said set of distributions to each of the at least one pattern areas;
> c) determine the transformation of transforming the at least one colour value of the at least one pattern area or image pattern such that the transformed colour value matches to the assigned distribution or distributions.

**14.** Method according to one of claims 6 to 13, wherein said method being iteratively conducted on the basis of a respectively last colour corrected digital representation of a photographic image.

**15.** Method according to one of claims 6 to 14, wherein the matching is performed in accordance with an optimisation process which evaluated a total matching degree between the transformed colour values and the colour values of the assigned distribution for each pattern area and which determines the transformation such that a function is optimised, said function mathematically combine single matching degrees for each pattern area and its assigned distribution.

**16.** Method according to one of claims 6 to 15, wherein said distribution(s) define a probability of colour values to represent a replacement colour and wherein said matching degree is determined based on said probability.

**17.** Method according to one of claims 6 to 16, wherein the transform is determined to include a colour appearance transform, said colour appearance transform modelling the appearance of the colour values of the image data additionally by a human being, who perceives the corrected image data.

**18.** A program which, when loaded into a computer or when running on a computer, courses the computer to perform a method in accordance to one of claims 1 to 17.

**19.** A computer storage medium having stored a program of claim 18.

**20.** Image processing device for processing image data, including

> a) an image data input section,
> b) an image data processing section,
> c) an image data recording section for recording image data, wherein the image data processing section is embodied to implement a method to one of claims 1 to 19.

**21.** Computer data signal embodied in a carrier wave, comprising instructions to implement a method according to one of claims 1 to 17.

**22.** Data carrier device carrying control data to control a computer-based device or image processing device to implement the method according to one of claims 1 to 17.

Fig. 1

Fig. 2

Fig. 3

Fig. 4

Fig. 5

Fig. 6b

Fig. 7

**European Patent Office**

## EUROPEAN SEARCH REPORT

Application Number

EP 01 10 3070

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 199 14 518 A (NIPPON ELECTRIC CO) 14 October 1999 (1999-10-14) * abstract * | 1-22 | G06T5/00 G06T11/00 |
| X | DE 197 54 909 A (MAX PLANCK GESELLSCHAFT) 24 June 1999 (1999-06-24) * abstract * | 1,18-22 | |
| E | WO 01 26050 A (A F A PRODUCTS GROUP INC) 12 April 2001 (2001-04-12) * page 1 * | 1,18-22 | |
| A | EP 0 927 952 A (ST MICROELECTRONICS SRL) 7 July 1999 (1999-07-07) * paragraphs [0024]-[0028] * | 16 | |
| A | US 5 544 258 A (LEVIEN RAPHAEL L) 6 August 1996 (1996-08-06) * abstract * | 1-22 | |

TECHNICAL FIELDS
SEARCHED      (Int.Cl.7)

G06T

The present search report has been drawn up for all claims

| Place of search | Date of completion of the search | Examiner |
|---|---|---|
| BERLIN | 3 August 2001 | Bouchaâla, N |

EPO FORM 1503 03.82 (P04C01)

EP 1 231 565 A1

# ANNEX TO THE EUROPEAN SEARCH REPORT
## ON EUROPEAN PATENT APPLICATION NO.

EP 01 10 3070

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2001

| Patent document cited in search report | | Publication date | Patent family member(s) | | Publication date |
|---|---|---|---|---|---|
| DE 19914518 | A | 14-10-1999 | JP | 2923894 B | 26-07-1999 |
| | | | JP | 11283025 A | 15-10-1999 |
| DE 19754909 | A | 24-06-1999 | AU | 2159999 A | 28-06-1999 |
| | | | WO | 9930278 A | 17-06-1999 |
| | | | EP | 1038267 A | 27-09-2000 |
| WO 0126050 | A | 12-04-2001 | NONE | | |
| EP 0927952 | A | 07-07-1999 | JP | 11312239 A | 09-11-1999 |
| US 5544258 | A | 06-08-1996 | NONE | | |

For more details about this annex : see Official Journal of the European Patent Office, No. 12/82